# EUROPEAN PATENT APPLICATION

(11) **EP 2 071 448 A2**
(43) Date of publication of application: **17.06.2009**
(21) Application number: 08253970.1
(22) Date of filing: 11.12.2008
(51) Int. Cl.: G06F 3/12

(54) **Information processing device, information processing device controlling method, and computer-readable recording medium**

(30) Priority: 14.12.2007 JP 2007322838; 08.10.2008 JP 2008262122
(71) Applicant: Ricoh Company, Ltd., Tokyo 143-8555 (JP)
(72) Inventor: Yanagi, Hideki, Tsukubamirai-shi Ibariki (JP)
(74) Representative: Mounteney, Simon James

(57) **Abstract**

An information processing device includes a plurality of modules, each of the plurality of modules including: a processing unit to receive input data and setting options from an external device, perform a processing of the input data in accordance with the setting options, and return a processing result to the external device; a storing unit to store information indicating setting items which are selectable as the setting options and setting values which are selectable for each setting item; and an information providing unit to transmit, in response to a command, information indicating setting items and setting values stored in the storing unit, to a source unit of transmitting the command.

## Description

### BACKGROUND OF THE INVENTION

### 1. Field of the Invention

This invention relates to an information processing device, an information processing device controlling method, and a computer-readable recording medium, in which the information processing device includes a processing unit which performs a specific processing of data input from an external device and returns a processing result to the external device.

### 2. Description of the Related Art

In recent years, when a device is controlled by a computer, a device driver configured to control the device is executed on the operating system (OS) so that the function of the device driver to control the device is carried out. In this case, if the user requests the device to perform a certain operation during execution of an application program (which will be called application), such as a document preparing program, a spreadsheet program or an image editing program, the application transmits the request to a process of the device driver so that the device driver controls the device in accordance with the request.

For example, when a printer is controlled to perform a printing job, the user sends a request for printing a document generated or viewed by means of the application, such as a document preparing program, a spreadsheet program or an image editing program, the application transmits the data of the document to be printed to a printer driver in response to the request, and the printer driver transmits the data of the document to the printer to perform the printing job.

There is also a printer driver which is configured to have the function to receive setting of various print capabilities of a printer, such as compilation, bookbinding, scaling, and finish processing. If the user selects a combination of such print capabilities, the printer driver makes it possible to obtain a printed sheet in conformity with the request of the user.

Generally, before requesting a printer to perform a printing job, the printer driver performs the processing of converting the data of the document to be printed into a print data in the form of a printer description language that can be interpreted by the printer, and of spooling the print data in a spool directory of a port monitor for outputting data to the printer.

When performing a printing job using the above-mentioned print capabilities, such as compilation, bookbinding, scaling, and finish processing, the document data is processed according to the print capabilities before generating a print data from the document data, and the print data is generated in which the contents of the setting of the print capabilities (the number of compiled pages, the order of arrangement of pages, the size, the staple, etc.) are incorporated.

However, all the print capabilities are not necessary for some users, and, in certain business environments, it is desired to cancel some of the print capabilities. In order to meet such demands, it is proposed to separate the printer driver into a basic part and an extended part, the basic part being configured to perform the processing of converting the document data into the print data, the extended part being configured to perform the processing of compilation, bookbinding, scaling, finish processing, etc. And the extended part is formed into a plug-in module. In this case, the plug-in module can be detachably attached to the basic part according to the required function, and the functions given to the printer driver can be changed.

For example, Japanese Laid-Open Patent Application No. 2004-326601 discloses a printer driver of this type. The paper "XPSDrv Filter Pipeline" (online, November 3, 2005) from Microsoft Corp. describes a printing support function for use with Microsoft Windows Vista ®. In this printing support function, the processing of generating a print data from a document data is decomposed into some filters, and those filters are provided. When generating a print data from a document data, the input document data is sequentially subjected to the processing performed by the necessary filters to generate the required print data.

However, when performing addition/deletion of a function by using the above-mentioned plug-in module, the plug-in module is designed as the extension module to the main part of the printer driver. Thus, the function of the plug-in module can be used only a predetermined printer driver is used. The plug-in module cannot be accessed directly by the application to obtain the information from the plug-in module or to make use of the function of the plug-in module. If the plug-in module is designed for a printer driver which is supported for the application, the function of the plug-in module cannot be used by the application. For this reason, the flexibility of the use of the extended part is low.

In order to enable the application to use the functions of the main part of the printer driver or the plug-in module, the use of an API (application programming interface) which is arranged only for use with the printer driver is proposed. However, when the function of the main part of the printer driver is upgraded, it is necessary to conduct modifications of the API while ensuring the associations of the API with the plug-in module. Although changing the plug-in module is not needed, the load of the development for this case will be heavy.

Similarly, the above problem arises also when it is intended to make use of functions other than the printer driver from the application or when it is intended to make use of functions other than the function of generating a print data.

### SUMMARY OF THE INVENTION

In one aspect of the invention, the present disclosure provides an improved information processing device in which the above-described problems are eliminated.

In one aspect of the invention, the present disclosure provides an information processing device which is able to easily construct the environment in which external print capabilities can be called and used by an application program in the information processing device with high flexibility.

In an embodiment of the invention which solves or reduces one or more of the above-mentioned problems, the present disclosure provides an information processing device including a plurality of modules, each of the plurality of modules comprising: a processing unit configured to receive input data and setting options from an external device, perform a processing of the input data in accordance with the setting options, and return a processing result to the external device; a storing unit configured to store information indicating setting items which are selectable as the setting options and setting values which are selectable for each setting item; and an information providing unit configured to transmit, in response to a command, the information indicating the selectable setting items and the selectable setting values stored in the storing unit, to a source unit of transmitting the command.

In an embodiment of the invention which solves or reduces one or more of the above-mentioned problems, the present disclosure provides an information processing device controlling method which controls an information processing device including a plurality of modules, each of the plurality of modules including: a processing unit configured to receive input data and setting options from an external device, perform a processing of the input data in accordance with the setting options, and return a processing result to the external device; a storing unit configured to store information indicating setting items which are selectable as the setting options and setting values which are selectable for each setting item; and an information providing unit configured to transmit, in response to a command, the information indicating the selectable setting items and the selectable setting values stored in the storing unit, to a source unit of transmitting the command, the information processing device further including a use module information storing unit configured to store use module information indicating a set of modules among the plurality of modules to be used to perform a series of processing, the information processing device controlling method comprising: transmitting a command corresponding to each of the set of modules, to each of the set of modules in accordance with the use module information; acquiring from each of the set of modules the information indicating the selectable setting items and the selectable setting values stored in the storing unit of each module; and generating data of a GUI for receiving a designated one of the selectable setting values for each of the selectable setting items, based on the acquired information.

According to the information processing device and the information processing device controlling method of the embodiments of the invention, it is possible to provide the environment in which external print capabilities can be called and used by an application program in the information processing device with high flexibility.

Other objects, features and advantages of the present invention will become more apparent from the following detailed description when read in conjunction with the accompanying drawings.

### BRIEF DESCRIPTION OF THE DRAWINGS

FIG. 1 is a block diagram showing the composition of an image forming system including a terminal device (which is an embodiment of the information processing device of the invention) and an image forming device (to which the information processed by the terminal device is transmitted).
FIG. 2 is a block diagram showing the hardware composition of a terminal device in the image forming system of FIG. 1.
FIG. 3 is a block diagram showing the functional composition of a terminal device and an image forming device shown in FIG. 1 when image formation is performed by the image forming device in response to a request received from the terminal device.
FIG. 4 is a diagram showing the functional composition of an application, a printer driver and a port monitor in the terminal device of FIG. 3.
FIG. 5 is a block diagram showing the composition of a filter in the printer driver of FIG. 4.
FIG. 6 is a diagram showing an example of function data shown in FIG. 5.
FIG. 7 is a diagram showing another example of the function data.
FIG. 8 is a diagram showing another example of the function data.
FIG. 9 is a diagram showing another example of the function data.
FIG. 10 is a diagram showing an example of filter configuration information described in a filter configuration file shown in FIG. 4.
FIG. 11 is a flowchart for explaining the processing performed by the information processing device of an embodiment of the invention.
FIG. 12 is a diagram showing an example of a GUI page displayed by the processing of FIG. 11 according to the filter configuration information of FIG. 10.
FIG. 13 is a sequence diagram for explaining the processing which is performed by the terminal device shown in FIG. 4.
FIG. 14 is a diagram showing the initial values of the contents of a filter configuration file.
FIG. 15 is a diagram showing an example of a print setting screen generated based on the contents of the filter configuration file shown in FIG. 14.
FIG. 16A and FIG. 16B are a flowchart for explaining the processing performed by the information processing device of an embodiment of the invention in the function change mode.
FIG. 17A and FIG. 17B are diagrams showing respective examples of a selected list and a non-select list generated by the processing of FIG. 16A and FIG. 16B.
FIG. 18 is a diagram showing an example of a filter configuration setting screen.

### DETAILED DESCRIPTION OF THE PREFERRED EMBODIMENTS

A description will be given of embodiments of the invention with reference to the accompanying drawings.

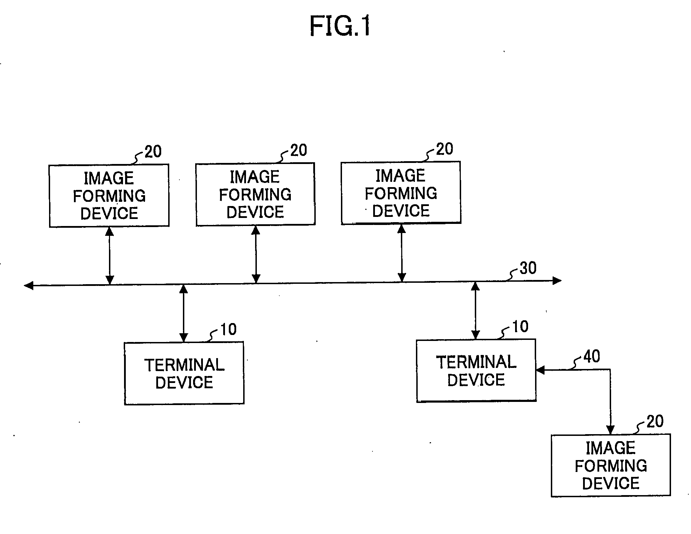

FIG. 1 shows the composition of an image forming system including a terminal device (which is an embodiment of the information processing device of the invention) and an image forming device (to which the information processed by the terminal device is transmitted).

The image forming system shown in FIG. 1 is constituted by a plurality of terminal devices 10 and a plurality of image forming devices 20 which are connected to each other by a network 30.

Each of the plurality of terminal devices 10 may be constituted by a computer, such as a PC (personal computer). Each of the plurality of image forming devices 20 may be constituted by a device which forms an image on a recording sheet in accordance with a received image data, such as a printer, a MFP (multi-function peripheral), etc.

The network 30 may be constituted by any of a LAN (local area network), a wired communication network, a wireless communication network, and other communication paths.

The image forming system is arranged so that the terminal device 10 transmits an image data to be printed to the image forming device 20 and requests the image forming device to perform printing of the image data, and the image forming device 20 is able to form an image on a recording sheet in accordance with the received image data.

The number of the terminal devices 10 and the number of the image forming devices 20, which constitute the image forming system of this embodiment, may be arbitrary. Moreover, a single terminal device 10 and a single image forming device 20 may constitute the image forming system of this embodiment.

In the image forming system shown in FIG. 1, a terminal device 10 and an image forming device 20 may be locally connected directly to each other by a communication path 40, such as a USB (Universal Serial Bus) cable, without using the network 30.

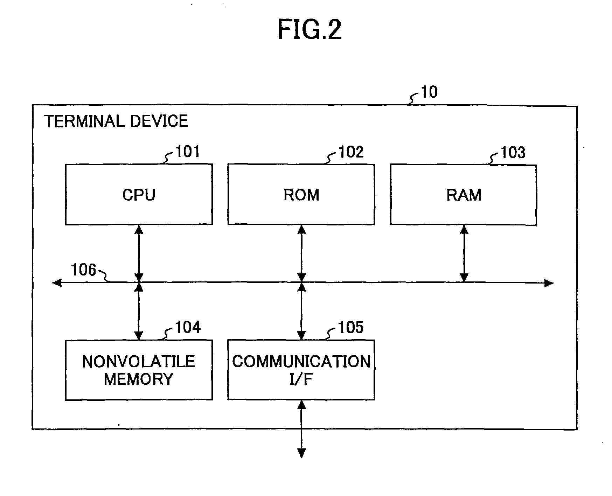

FIG. 2 shows the hardware composition of a terminal device 10 in the image forming system of FIG. 1.

The terminal device 10 may be constituted by a PC (personal computer). For example, the terminal device is arranged to include a CPU 101, a ROM 102, a RAM 103, a non-volatile memory 104, and a communication interface (I/F) 105, and these elements are interconnected by a system bus 106.

The CPU 101 is capable of performing various functions (which will be described later) by storing an appropriate program in the ROM 102 or the non-volatile memory 104.

Because the hardware composition of the image forming device 20 is known in the related art, and illustration thereof will be omitted. The image forming device 20 may be arranged to include a control unit containing a CPU, a ROM and a RAM, a communication I/F, and a printer containing a print engine which is arranged to form an image on a recording sheet by using an appropriate printing method (an electrophotographic printing method or an inkjet printing method).

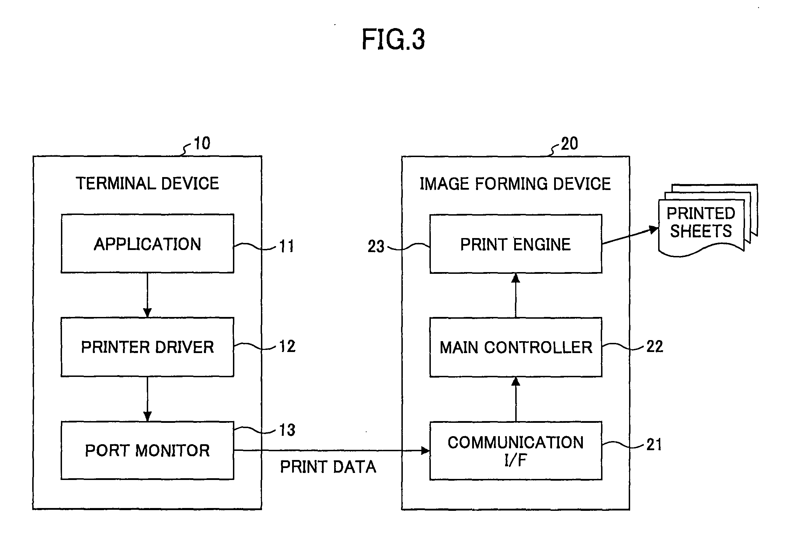

FIG. 3 shows the functional composition of a terminal device 10 and an image forming device 20 shown in FIG. 1 when image formation is performed by the image forming device 20 in response to a request received from the terminal device 10.

As shown in FIG. 3, the terminal device 10 includes an application 11 which is generally configured to perform any of various functions including figure drawing, word processing, spreadsheet processing, etc. A user sends a print request to the application 11 when it is intended to print a document or a figure which is processed by the execution of the application 11.

Moreover, the terminal device 10 includes a printer driver 12 which is configured to convert a document data, which is output from the application 11 and indicates the contents of the image to be printed, into a print data in the form of printer description language which can be processed by the image forming device 20.

When a print request is received from the user, the application 11 transfers the document data indicating the contents of the image to be printed to the corresponding printer driver 12 of the specified printer. At this time, the printer driver 12 converts the received document data into a print data in the form of printer description language which can be processed by the specified printer, so that the print data is spooled in a spool directory (not shown).

The port monitor 13 has a function to perform the data transfer between the terminal device 10 and the image forming device 20, and this port monitor 13 transmits the data spooled in the spool directory to the image forming device 20 concerned.

As shown in FIG. 3, the image forming device 20 includes a communication interface unit 21, a main controller 22, and a print engine 23.

The communication interface unit 21 has a function to receive the print data from the terminal device 10 or another external device at the image forming device 20 and transfer the received print data to the main controller 22.

The main controller 22 has a function to drive the print engine 23 in accordance with the print data received from the communication interface unit 21, so that the print engine forms an image on a recording sheet. For example, by the processing of this image formation, an image is drawn in the image memory based on the print data, image data in the form of a bit map is generated, and the print engine 23 is driven based on the image data, so that the image based on the received print data is printed on a recording sheet.

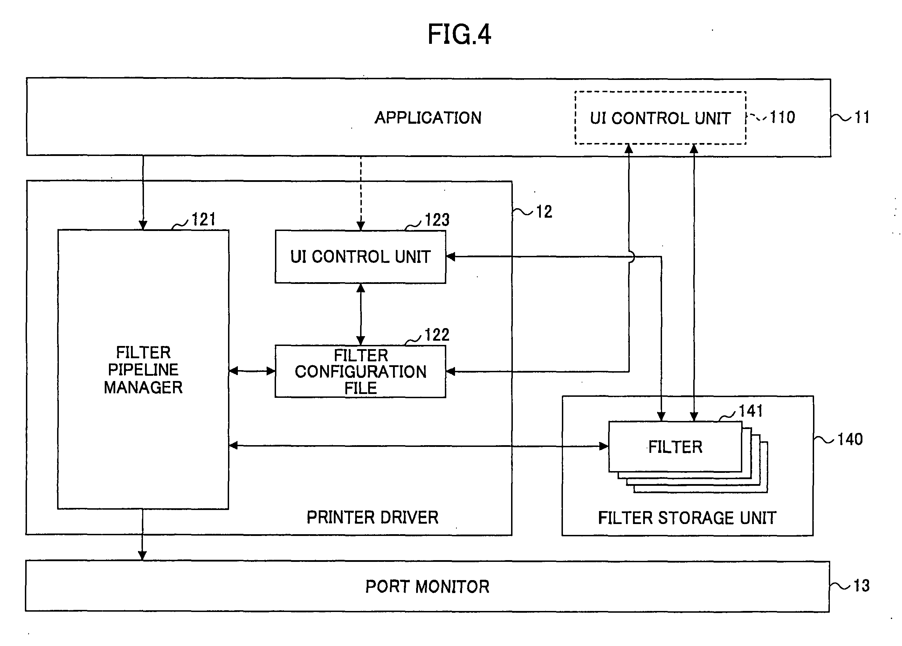

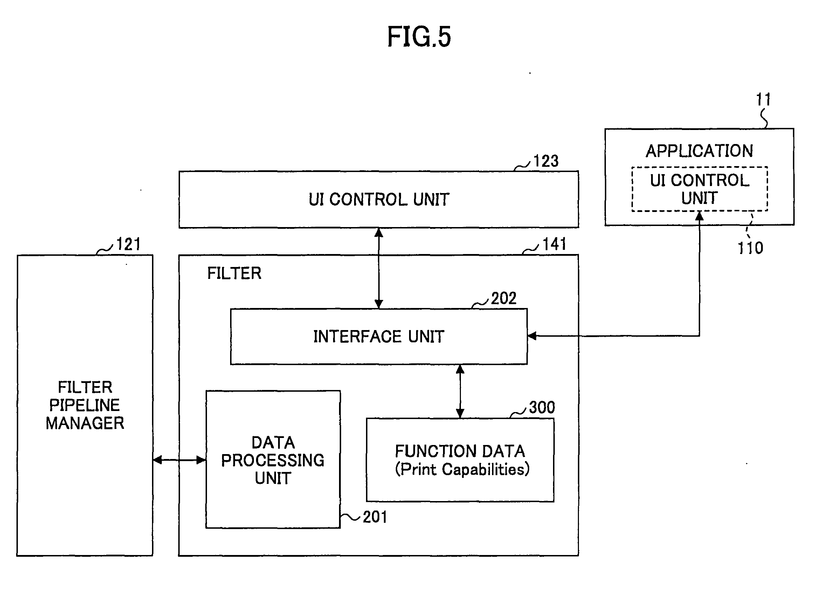

FIG. 4 shows the functional composition of a printer driver shown in FIG. 3. FIG. 5 shows the composition of a filter in the printer driver shown in FIG. 4.

In this embodiment, the function of the printer driver 12 shown in FIG. 3 is performed in accordance with a filter 141 stored in a filter pipeline manager 121, the filter configuration file 122, the UI control unit 123, and the filter storage unit 140 as shown in FIG. 4. The filter 141 serves to perform the processing of converting the document data which are output from the application 11, into the print data which can be processed by the image forming device 20.

The filter 141 is a module which is configured to receive input data and setting options from an external device, perform a specific processing of the input data in accordance with the setting options, and return a processing result to the external device. And the processing of converting the document data into the print data is included in the specific processing performed by the filter 141. Specifically, a data processing unit 201 in the filter 141 shown in FIG. 5 is a processing unit which actually performs the processing of converting the document data into the print data.

However, a single filter 141 does not necessarily take charge of all the steps of the processing of converting the document data output from the application 11 into the print data which is finally output to the image forming device 20. Namely, a plurality of filters which take charge of different processes about printing respectively are provided in a filter storage unit 140. The mechanism of the printer driver 12 is arranged so that a combination of filters selected arbitrarily from among the plurality of filters are caused to perform sequentially a processing operation of the document data received from the application 11, and the print data which is finally output to the image forming device 20 is generated.

It is preferred that the processing which is performed by one of the plurality of filters corresponds to one of various printing functions. It is conceivable that the printing functions include compilation, mark/ground tint addition, resolution setting, color adjustment, and finish processing (punching, staple, etc.).

Moreover, it is preferred that at least one basic filter which takes charge of performing a processing indispensable for generating print data from document data and a plurality of secondary filters which take charge of performing the above-mentioned printing functions respectively are arranged, and a combination of secondary filters are arbitrarily selected from among the plurality of secondary filters and used concurrently with the basic filter.

As shown in FIG. 5, the filter 141 includes function data (print capabilities) 300 which contain the information indicating selectable setting items and selectable setting values for each setting item with respect to the setting options used by the data processing unit 201 when performing the processing of the input data.

The function data 300 are generated beforehand by the provider of the filter 141 according to the contents of the processing which is to be performed by the data processing unit 201.

The interface unit 202 is an information providing unit, and the interface unit 202 is configured to provide, in response to a specific command and a specific function call, the function data 300 to a source unit of transmitting the command or the function call.

All the plural filters 141 in the information processing device of this embodiment are configured to allow an external device to acquire the function data 300 by using the same command.

However, if the external device which requests receiving of the function data 300 is able to detect different commands and function calls for the respective filters 141, any of the different commands and function calls for the respective filters 141 may be used instead.

The program for performing the function of each filter 141 may be prepared as a DLL (dynamic-link library) for the filter 141 if Microsoft Windows Vista ® is used as the OS (operating system).

The function data 300 may be described in the format of print capabilities defined by the specifications of the OS, using XML (extensible markup language).

The terminal device 10 acquires the filter 141 from the external device (the server on the network 30, any of various storage media (CD, USB memory, etc.)), and stores the acquired filter 141 into a storage area other than the filter storage unit 140.

Because the filter 141 stored in the storage area other than the filter storage unit 140 is not registered into the filter configuration file 122 and the filter storage unit 140, it is not registered into a selected list or a non-select list which will be described later.

The UI control unit 123 or UI control unit 110 acquires information indicating a file name and a function name of the filter 141 from the filter 141 stored in the storage area other than the filter storage unit 140, registers the acquired information into the filter configuration file 122, and stores the filter 141 in the filter storage unit 140. Thereby, the filter 141 is registered into the selected list.

If the filter 141 is not registered in the filter configuration file 122 but stored only in the filter storage unit 140, the filter 141 is registered into the non-select list.

On the other hand, the filter configuration file 122 shown in FIG. 4 is a file which stores the data indicating a set of filters 141 from among the plural filters 141 stored in the filter storage unit 140 and indicating the sequence of using the filters 141 when generating the print data. The filter configuration file 122 is equivalent to a use module information storing unit in the claims. There may be a case in which the number of filters used is only one.

When the document data indicating the printing content and a print command requesting generation of print data are received from application 11, the filter pipeline manager 121 transfers the document data to an appropriate filter 141, causes the filter 141 to perform the processing in charge of the filter to generate the print data to be output to the image forming device 20, and transfer the generated print data to the port monitor 13.

At this time, the filter pipeline manager 121 specifies a set of filters used for performing the processing by making reference to the filter configuration file 122, and loads the programs (the dynamic-link libraries) corresponding to the set of filters. And the filter pipeline manager 121 transfers the document data and the setting data contained in the print command to the first one of the set of filters, causes the filter to perform the processing of the document data in accordance with the contents of the setting data, and receives the data after the processing is performed.

Then, the filter pipeline manager 121 transfers the processed data and the setting data contained in the print command to the following filter, causes the following filter to perform the processing of the processed data in accordance with the contents of the setting data, and receives the data after the processing is performed. In this manner, the processing operation is repeated for all the set of filters being used, and the print data to be finally outputted to the image forming device 20 can be obtained. The filter pipeline manager 121 is equivalent to a processing control unit in the claims.

The standard functional elements provided as in Microsoft Windows Vista ® may be used as the filter pipeline manager 121 and the filter configuration file 122 in this embodiment. In this case, because the format of the filter configuration file 122 is defined by the specifications of the OS, the filter configuration file 122 may be described in the defined format using XML.

The UI control unit 123 generates the data of a GUI (graphical user interface) page for receiving setting data needed when generating print data by using the printer driver 12. The UI control unit 123 is equivalent to a GUI preparing unit in the claims.

The contents of the setting data needed when generating print data vary depending on the contents of the processing of generating the print data, or the kind of the filter being used.

When generating the data of a GUI page, the UI control unit 123 specifies a set of filters used for generation of print data by making reference to the filter configuration file 122. The UI control unit 123 accesses the respective filters to be used and acquires the information indicating selectable setting items and selectable setting values for each setting item with respect to the setting options related to each filter. Then, the UI control unit 123 generates the data of a GUI page for receiving a designated one of the selectable setting values for all the setting items used for printing.

Before generating data of a GUI page, the filter configuration file 122 is always accessed. If this is performed, even when the filters used for generation of print data are changed, the data of a GUI page which receives the setting data suitable for the changed filters can be generated. The format of the GUI can be arbitrarily set by the designer of the printer driver 12.

When the displaying of a GUI page for performing the print setting is requested by the application 11, the UI control unit 123 displays the GUI page on the display monitor based on the generated data, and receives a designated print setting data. The UI control unit 123 is also equivalent to a designation receiving unit in the claims. And the contents of the print setting data received are included in the print command which requests generation of print data, and transferred to the filter pipeline manager 121.

The same function as in the UI control unit 123 may be arranged in any module which can acquire the contents of the filter configuration file 122 and the filter 141 by accessing the filter configuration file 122 and the filter 141. This is because the information indicating the necessary setting items and setting values can be acquired by accessing the filter configuration file 122 and the filter 141.

For example, when the filter configuration file 122 and the function data 300 are described in the format defined by the specifications of the OS as mentioned above, the program for accessing the contents of the file and the function data can be developed in accordance with the specifications of the OS.

Therefore, if the locations of the DLL which performs the function of the filter 141 and the filter configuration file 122 can be detected by the application 11, the UI control unit 110 which has the same function as in the UI control unit 123 may be arranged in the application 11. In this manner, the developer of the application 11 can design a GUI freely and the flexibility of the design will increase.

If the UI control unit 110 is arranged in the application 11, the UI control unit 123 is not an indispensable element of the printer driver 12. However, in order to be able to make use of the printer driver 12 from the application which has no UI control unit, it is preferred to arrange the UI control unit 123 also in the printer driver 12.

Next, the contents of the function data 300 and the filter configuration file 122 will be described.

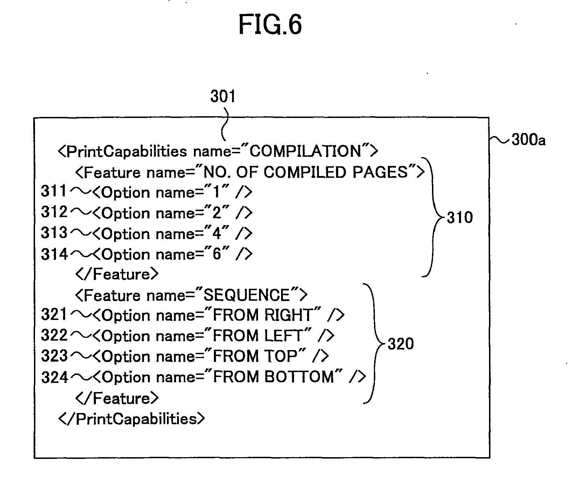

FIGs. 6 to 9 show examples of the function data 300. In the examples of FIGs. 6 to 9, the function data 300 (which are indicated by reference numerals 300a-300d) are described in the form of Print Capabilities. For the sake of convenience of description, the simplified function data including only the characteristic portions are shown in FIGs. 6 to 9.

Although the Print Capabilities in the specifications of Microsoft Windows Vista ® are data indicating the contents of functions of a printer controlled by a printer driver, the function data 300 in this embodiment employ the form of Print Capabilities only but are described for the purposes different from those of the former.

The function data 300a shown in FIG. 6 are described by XML (extensible markup language) data and include one Print Capabilities element as the uppermost element, which indicates that the data are described in the form of Print Capabilities.

A character string which indicates the name of the function of the filter 141 is described as the name attribute 301 of the Print Capabilities element, and the name of the function of the filter 141 in this example is "compilation".

And one Feature element which is a child element of the Print Capabilities element is one setting item among the setting options used when the filter is caused to process the input data. The name attribute of one Feature element indicates the content of the setting item.

The two Feature elements 310 and 320 in the example of FIG. 6 indicate that one of the setting values is selectable for each of the two setting items of "the number of compiled pages" and "sequence" in the filter which performs the processing concerning the "compilation" function.

However, setting of these items is not indispensable. If the setting data of these setting items are not received when the filter is requested to perform the processing, the processing may be performed using a predetermined default (for example, the selection of the first option).

The Option element which is a child element of each Feature element indicates one option (or one setting value) which is selectable for the setting item indicated by the Feature element.

For example, the Feature element 310 "NO. OF COMPILED PAGES" in FIG. 6 (in which the value of the name attribute is "the number of compiled pages") includes four Option elements 311-314 as its child elements, which means that one of the setting values "1", "2", "4", and "6" indicated by these option name attributes is selectable for the setting item of "the number of compiled pages" as a possible setting value.

Similarly, the Feature element 320 "SEQUENCE" in FIG. 6 includes four Option elements 321-324 as its child elements, which means that one of the setting values "from the right", "from the left", "from the top", and "from the bottom" indicated by these option name attributes is selectable for the setting item of "sequence" as a possible setting value.

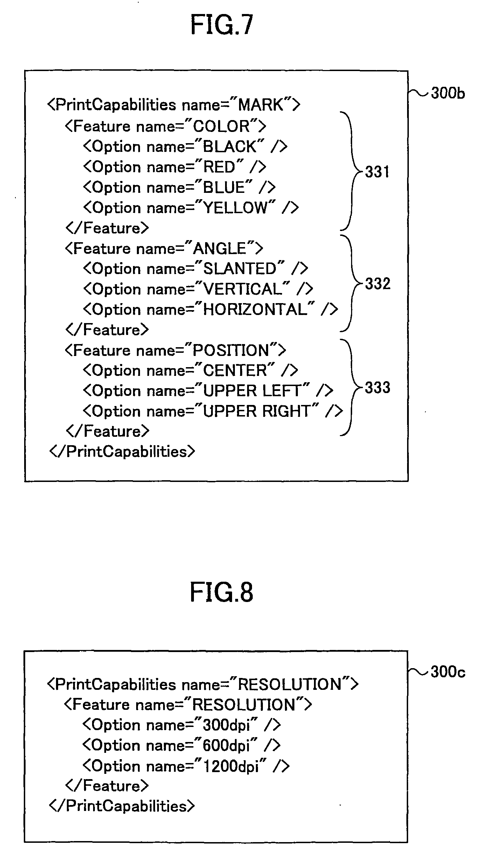

The function data 300b and 300c shown in FIG. 7 and FIG. 8 are the examples of the function data of filters different from the filter in FIG. 6. However, the data structure of these function data 300b and 300c is the same as that of the function data 300a shown in FIG. 6.

In the example shown in FIG. 7, the value of the name attribute of the Print Capabilities element, is "MARK", which indicates that the function data 300b relates to the filter which performs the processing concerning "MARK" function. The Feature elements 331-333 listed below the Print Capabilities element indicate that setting of the setting items of "color", "angle", and "position" is possible, and that one of the setting values indicated is selectable for each of these setting items as a possible setting value.

Similarly, in the example shown in FIG. 8, the value of the name attribute of the Print Capabilities element is "RESOLUTION", which indicates that the function data 300c relates to the filter which performs the processing concerning "resolution" function. The Feature element listed below the Print Capabilities element indicates that one of the setting values indicated is selectable for the setting item of "resolution" as a possible setting value.

In the examples shown in FIGs. 6 to 8, the option name attributes indicate the selectable setting values for each setting item. However, each option name attribute may be described to specify a range of a possible setting value. For example, numeric values of an upper limit and a lower limit may be described to specify the range of a possible setting value. Alternatively, at this time, describing whether a possible setting value is a continuation value or a discrete value (for example, an integer) is also possible. Alternatively, describing a text and a logical value (YES/NO) is also possible.

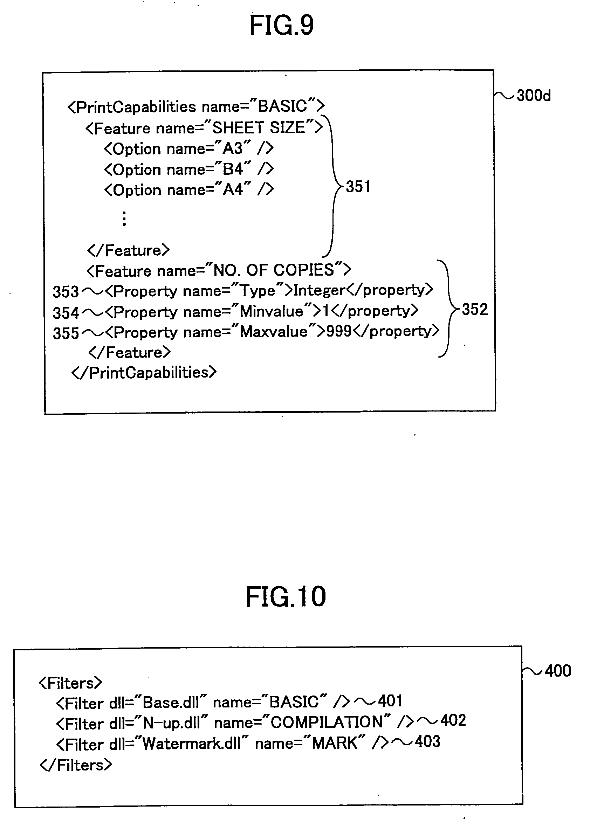

FIG. 9 shows an example of the function data including a setting item for which an integral value should be set up. The function data 300d of FIG. 9 is the function data relating to "basic" filter. The two Feature elements 351 and 352 in the example of FIG. 9 indicate the setting items of "sheet size" and "number of copies".

For the setting item of "sheet size" in the example of FIG. 9, one of the setting values indicated by the option name attributes is selectable as mentioned above. However, for the setting item of "number of copies", an integral value within a specified range should be set up. The three Property elements 353-355 as the child elements of the Feature element 352 indicate that an integral value should be set up for this setting item, the minimum value of a possible setting value is 1, and the maximum value of a possible setting value is 999.

FIG. 10 shows an example of filter configuration information described in the filter configuration file 122.

The example shown in FIG. 10 is data according to the specifications of Microsoft Windows Vista ®. However, for the sake of convenience of description, the simplified filter configuration information including only the characteristic portions is shown in FIG. 10.

The filter configuration information 400 shown in FIG. 10 is also described by the XML (extensible markup language) data, and includes one Filters element as the uppermost element, which indicates that it is data of the filter configuration information 400.

One Filter element which is a child element of the Filters element in the example of FIG. 10 indicates one filter used for performing the processing of generating print data. The order of describing the Filter elements below the Filters element indicates the sequence of the filters to be used. The value of the dll attribute of each filter element indicates the file name of the program for performing the function of the filter, and the value of the name attribute indicates the name of the function performed by the filter. These names are set up by copying the value of the name attribute of the Print Capabilities element in the function data included in each filter at the time of generation of the filter configuration information.

The filter elements 401-403 in the example of FIG. 10 indicate that the filters of the three functions "basic", "compilation", and "mark" are used in this order in the printer driver 12.

Next, the processing which displays a GUI page for receiving setting data needed when the printer driver 12 generates print data, based on the filter configuration information and the function data, will be described.

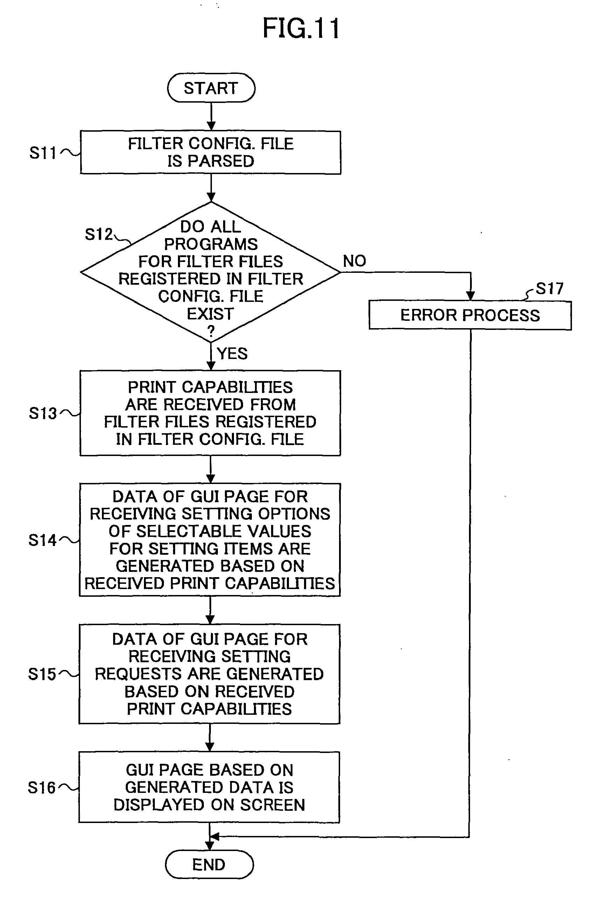

FIG. 11 is a flowchart for explaining the processing performed by the information processing device of an embodiment of the invention.

Specifically, the processing of FIG. 11 is performed by the CPU 101 which functions as the UI control unit 123 or the UI control unit 110 shown in FIG. 4.

The processing of FIG. 11 is started when the displaying of the setting screen for setting the printer driver 12 is requested (which is a case in which the print setting options are set up before a printing job is performed) or when addition/deletion of a function to the printer driver 12 is performed (which will be described later).

Upon start of the processing of FIG. 11, the CPU 101 in step S11 parses the contents (filter configuration data) of the filter configuration file 122 of the printer driver 12 to be used or for which the print setting options are set up. To perform this parsing, it is necessary to arrange beforehand a parser which is appropriate for the format of the filter configuration data. The location of the filter configuration file 122 may be stored in the UI control unit 123 together with the identification information of the printer driver 12. Or the filter configuration file 122 may be accessed by searching a storage location (or folder) predetermined by the setting of the OS.

Next, in step S12, it is determined whether all the programs for performing the functions of the filters registered in the filter configuration file exist in the locations that are accessible.

In the example shown in FIG. 10, only the file names of the programs are described in the filter configuration data. If the folder used as the filter storage unit 140 is defined by the setting of the OS, the files stored in the folder may be searched. The determination in step S12 may be made depending on whether all the programs described in the filter configuration data can be found there.

When the result of the determination in step S12 is negative, the control progresses to step S17. In step S17, the CPU 101 performs an error process, and the processing of FIG. 11 is terminated.

On the other hand, when the result of the determination in step S12 is affirmative, the control progresses to step S13. In step S13, the CPU 101 acquires the function data from each filter registered in the filter configuration file.

As mentioned above, the program for performing the function of a filter is executed, a specific command for acquiring the function data is transmitted to the process of the program being executed, and the process returns the contents of the function data by using the function of the interface unit 202 shown in FIG. 5.

Next, in step S14, the CPU 101 generates the data of a GUI page for receiving a designated one of the selectable setting values for each of the selectable setting items with respect to each filter registered into the filter configuration file, based on the acquired function data.

As described above with reference to FIGs. 6 to 9, the function data contain the information indicating the selectable setting values for each of the setting items used when the filter performs the processing of input data, what kind of a GUI page should be generated is determined based on the acquired function data.

For example, with respect to the setting item of "the number of compiled pages" indicated by the Feature element 310 in the "compilation" filter of FIG. 6, it is necessary to generate the date of a GUI page which includes a list of drop down items, radio buttons, or icons indicating the four selectable setting values "1", "2", "4", and "6".

However, the data of a concrete GUI page being generated may be arbitrarily set up by the UI control unit.

For example, the data of such GUI may be generated by transforming the function data described in the XML form, in accordance with a predetermined rule. Specifically, by the transforming, a tag indicating the header is attached to the value of the Name attribute of the Feature element, and tags indicating the selectable setting values in the list of drop down items are attached to the values of the Name attributes of the Option elements below the Feature element.

Next, in step S15, the data of the GUI page of each filter generated in step S14 is included in a basic frame, and additional data of the GUI page for receiving setting requests is generated. The additional data generated in step S15 indicates a portion of the GUI page which does not depend on the contents of the filter. The additional data indicates, for example, a print button, a cancel button, etc. to be included in the GUI page. Alternatively, another basic frame may be used according to the situation in which the GUI page is displayed.

Next, in step S16, the CPU 101 displays the GUI page on the display monitor, based on the generated data, and the control is shifted to the state in which the information processing device awaits receiving any operation from the user. Then, the processing of FIG. 11 is terminated.

When any operation is performed by the user on the displayed GUI page, the CPU 101 performs the processing which is different from the processing of FIG. 11, in response to the operation, and operates according to the contents of the operation.

When the above processing of FIG. 11 is executed, the CPU 101 functions as an acquiring unit, a GUI preparing unit, and a designation receiving unit in the claims.

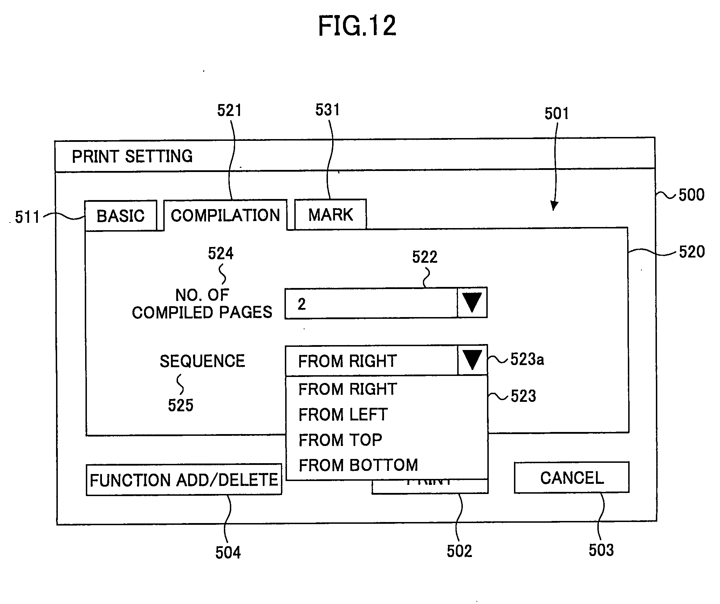

FIG. 12 shows an example of a GUI page displayed by the processing of FIG. 11 according to the filter configuration information of FIG. 10.

The print setting screen 500 shown in FIG. 12 is a screen which receives the print setting for the time of performing a printing job. The print setting screen 500 includes a setting entry portion 501 located in the center, and a print button 502, a cancel button 503 and a function add/delete button 504 which are located under the portion 501.

In the print setting screen 500, the setting entry portion 501 is a portion generated according to the filter configuration data and the function data, and other portions are portions equivalent to the basic frame. In the example of FIG. 12, a setting entry portion for receiving setting values of the setting items which are used by each of the filters of "basic", "compilation" and "mark" is prepared for each filter, and it is possible to change one of these setting entry portions to another by selecting one of tabs 511, 521 and 531.

Because the filters of "basic", "compilation" and "mark" are registered in the filter configuration information of FIG. 10, a basic tab 511, a compilation tab 521, and a mark tab 531 are arranged in the print setting screen 500. As the caption of these tabs, the value of the name attribute of the Filter element in the filter configuration information is used.

The compilation tab 521 is selected in the print setting screen 500 of FIG. 12, and the state where the compilation setting screen 520 for receiving setting values of the compilation function is displayed is shown in FIG. 12.

The filter configuration information of the filter of the compilation function is equivalent to the function data 300a shown in FIG. 6, and this information indicates that the setting items of this filter are "the number of compiled pages" and "sequence". Accordingly, two drop down lists 522 and 523 for receiving setting values of these setting items are arranged in the print setting screen 500. The values of the name attributes of the Feature elements 310 and 320 in the function data 300a are used as the headers 524 and 525 of the drop down lists 522 and 523.

In the example of FIG. 12, the button 523a in the drop down list 523 is depressed and the state where some setting options are displayed is shown. As the setting options, the values of the name attributes of the Option elements 321-324 located below the "sequence" Feature element 320 are used without change.

Although not illustrated in FIG. 12, corresponding setting entry portions for the basic tab 511 and the mark tab 531 can be automatically generated based on the function data corresponding to each filter, similarly.

As for portions other than the setting entry portion 501, the print button 502 is a button for receiving a request for execution of printing. When this print button 502 is depressed, the UI control unit 123 or 110 which displayed the print setting screen 500 generates a print command including the setting values for the setting items of each filter received from the print setting screen 500, and sends the print command to the filter pipeline manager 121 together with the data of the document to be printed, so that the filter pipeline manager 121 is caused to generate print data from the document data.

The cancel button 503 is a button for receiving a request for canceling printing. The function add/delete button 504 is a button for receiving a request for displaying the screen for performing the addition and deletion of a function in the printer driver 12.

According to the processing of FIG. 11, the data of the print setting screen is generated in accordance with the contents of the filter configuration file 122 and the function data 300 of each filter at the time of displaying the GUI page. Thus, even when the filter used for generation of print data is changed, a GUI page for receiving setting values in conformity with the changed filter can always be generated.

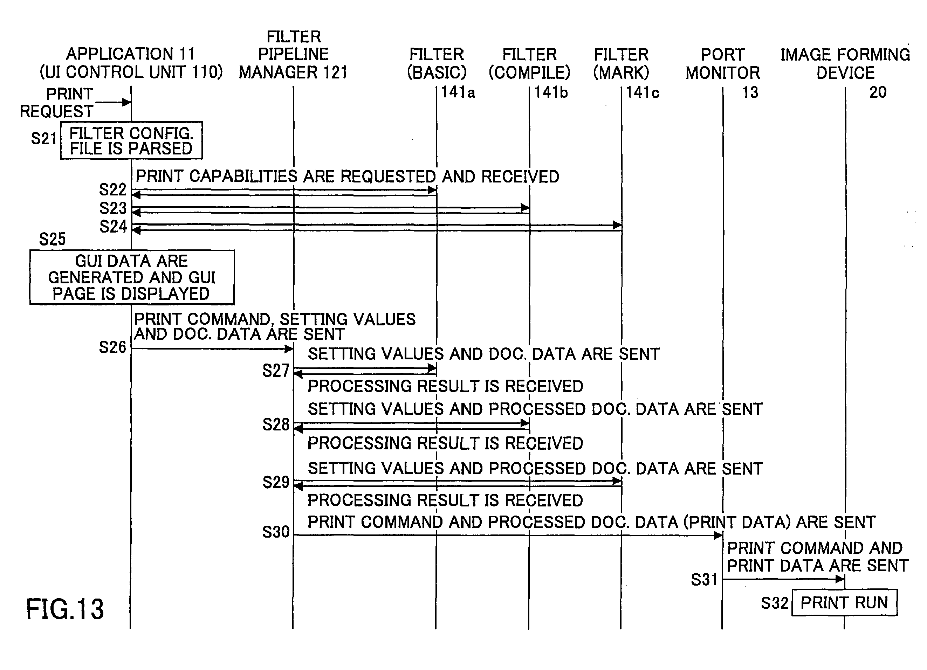

FIG. 13 is a sequence diagram for explaining the processing which is performed by the terminal device shown in FIG. 4. This processing is performed in the procedure from reception of a print request to execution of printing in the case of receiving the print setting data by the UI control unit 110 of the application 11.

As shown in FIG. 13, when the application 11 receives a print request sent to the image forming device 20, the application 11 makes reference to the filter configuration file 122 of the printer driver 12 used for the printing, and parses the contents of the filter configuration file 122 by using the function of the UI control unit 110 provided in the application 11 (S21).

Suppose that the contents of the filter configuration file 122 are the same as those shown in FIG. 10. The syntactic analysis in this case indicates that three filters 141a, 141b and 141c corresponding to the basic, compilation and mark filters respectively shall be used for generation of print data.

The UI control unit 110 transmits a predetermined command for acquiring the Print Capabilities (the function data) to each of the filters 141a-141c, and acquires the Print Capabilities containing the information indicating the selectable setting items used by each of the filters 141a-141c and the selectable setting values for each of the setting items (S22-S24). The order of acquisition of the function data from the filters may be at random.

After the Print Capabilities are acquired from the filters used, the UI control unit 110 generates the data of a GUI page as shown in FIG. 12 based on the acquired Print Capabilities, displays the GUI page on the display monitor, and receives from the user the selected setting values of the setting items used by each of the filters 14a-14c (S25).

When the print button 502 is depressed by the user after the necessary print setting is performed, the UI control unit 110 generates a print command which requests generation of print data based on the document data being transmitted with the print command, and transmits the print command and the document data indicating the contents of the document to be printed to the filter pipeline manager 121 (S26).

The command transmitted at this time contains the information indicating the setting options received in step S25. If Microsoft Windows Vista ® is used as the OS, the information indicating the setting options may be described as data in the form of Print Ticket which includes any of the Option attributes for respective Feature attributes in the Print Capabilities of each filter.

When the above-mentioned command and the document data are received, the filter pipeline manager 121 makes reference to the filter configuration file 122 and starts execution of the filters 141a-141c used for generation of print data. And the filter pipeline manager 121 transmits, to one of the filters 141a-141c, the setting values of the setting items used for the processing by the filter among the setting data contained in the received command, together with the document data being processed, and receives the processed data from the filter. This operation is repeated for all the filters 141a-141c (S27-S29).

The sequence of transmitting data to the filters at this time is defined by the contents of the filter configuration file 122. And transmit the data after the processing received from the first filter to the following filter, and the next processing is performed to the data. The sequential operation is performed such that the processing result is received from the first filter, the received data is transmitted to the following filter and the processing to the data is performed by the following filter, the processing result is received from the following filter, and the received data is transmitted to the last filter. Then, the processing result received from the last filter shall be the print data to be transmitted to the image forming device 20.

When the processing result is received from the last filter, the filter pipeline manager 121 transmits the processing result (the print data) to the port monitor 13 together with the print command which requests the image forming device 20 to perform the printing, so that the print command and the print data are stored in a predetermined spool directory (S30).

Next, at an appropriate time, the port monitor 13 transmits the print command and the print data to the image forming device 20 (S31). The image forming device 20 performs the printing according to the received print data (S32). Accordingly, the printing based on the document data output from the application 11 and the setting options received from the user in the step S25 can be performed by the image forming device 20.

Next, the addition/deletion of a function to the printer driver 12 will be described.

As described with FIG. 4, the filter pipeline manager 121 in the printer driver 12 changes the set of filters used when generating print data (i.e., changing the contents of the filter configuration file 122), so that the addition/deletion of a function which can be used at the time of printing is allowed.

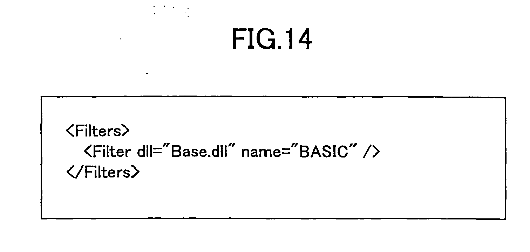

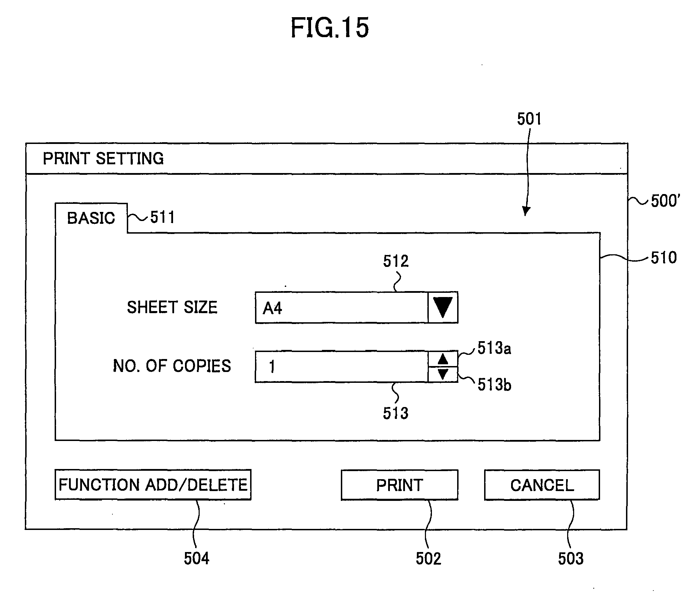

FIG. 14 shows the initial values of the contents of the filter configuration file 122. FIG. 15 shows an example of a print setting screen generated based on the contents of the filter configuration file 122.

Suppose that, as shown in FIG. 14, the initial values of the contents (filter configuration data) of the filter configuration file 122 in the printer driver 12 are set up to use only the basic filter for generating print data. With this basic filter, the basic setting items, such as a sheet size and the number of copies, may be set up.

A print setting screen which is generated through the processing of FIG. 11 by making reference to the Print Capabilities of the basic filter of FIG. 9 based on the filter configuration data of FIG. 14 is as shown in FIG. 15.

In the print setting screen of FIG. 15, only a basic tab 511 for selecting a screen corresponding to the "basic" filter is formed in a setting entry portion 501, and a basic screen 510 for receiving a designated one of the selectable setting values for each of the setting items of "sheet size" and "number of copies" concerning the basic function is displayed.

As for the "sheet size", a designated one of the selectable setting values indicated by a drop down list 512 is received. As for "the number of copies", an input numeric value specified in a numeric value entry portion 513 is received. And the input numeric value may be changed by depressing one of an increase button 513a and a decrease button 513b.

The user can request the image forming device to perform a printing job using only the basic function by entering the necessary setting values in this print setting screen 500' and depressing the print button 502.

On the other hand, when the user desires to use a function extension, the user depresses the function add/delete button 504. This allows the information processing device to shift to a function change mode for adding or deleting a filter to be used by the filter pipeline manager 121.

Similarly, the information processing device shifts to the function change mode when the function add/delete button 504 is depressed in the setting entry screen 500 in the state where some functions were already added as shown in FIG. 12.

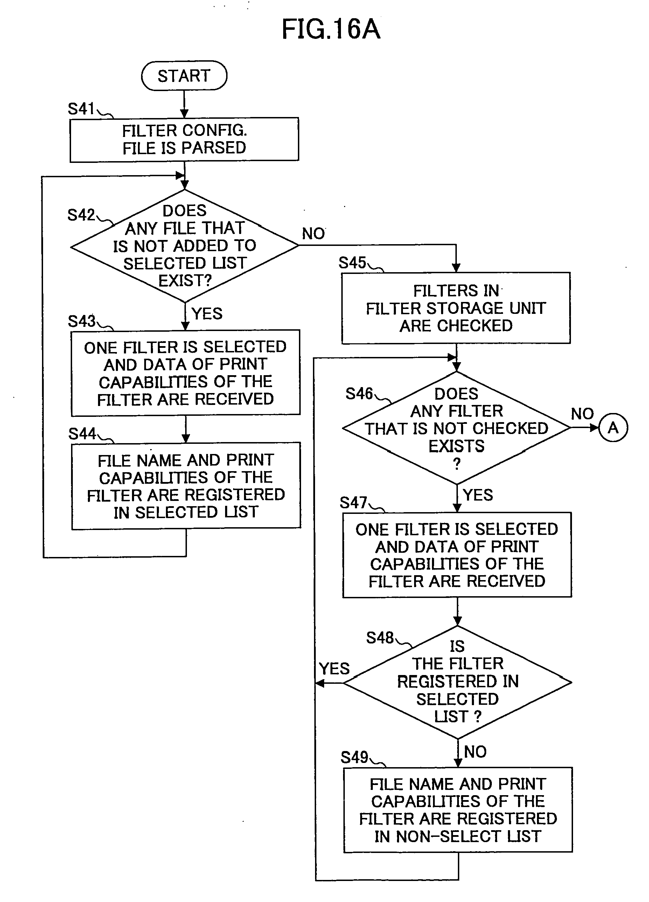

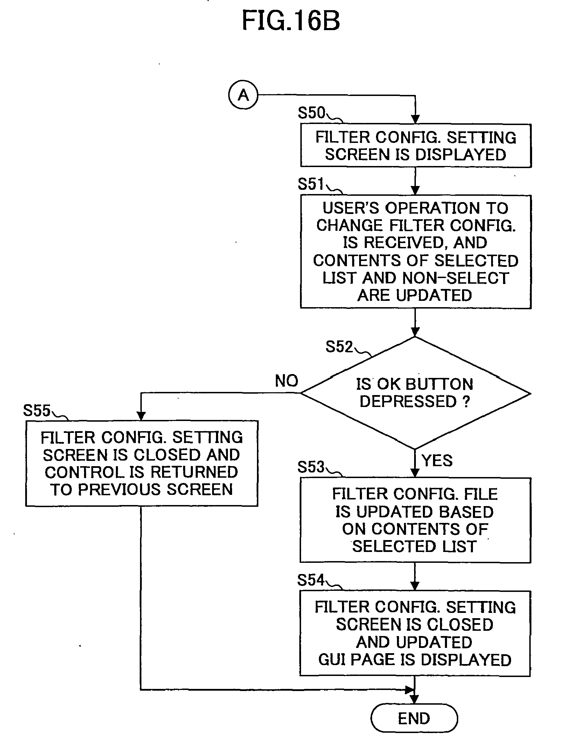

FIG. 16A and FIG. 16B are a flowchart for explaining the processing performed by the information processing device of an embodiment of the invention in the function change mode.

Specifically, the processing of FIG. 16A and FIG. 16B is performed by the CPU 101 which functions as the UI control unit 123 or the UI control unit 110 shown in FIG. 4.

The CPU 101 starts the processing in the flowchart shown in FIG. 16A when the function add/delete button 504 is depressed in the setting entry screen displayed in the step S16 in FIG. 11.

When the filter 141 is stored in the storage area other than the filter storage unit 140 at this time, the UI control unit 123 or the UI control unit 110 acquires the information indicating the file name and function name of the filter 141 from the filter 141 stored in the storage area other than the filter storage unit 140, registers the acquired information in the filter configuration file 122, and stores the filter 141 in the filter storage unit 140. Thereby, the filter 141 newly registered in the filter configuration file 122 is registered in the selected list which will be mentioned later.

If the filter 141 stored in the storage area other than the filter storage unit 140 is stored only in the filter storage unit 140 and not registered in the filter configuration file 122, then the filter 141 is registered in the non-select list which will be mentioned later.

As shown in FIG. 16A, the CPU 101 in step S41 parses the contents of the filter configuration file 122 similar to the step S11 in FIG. 11. Next, in steps S42 to S44, by making reference to the Print Capabilities of each of the filters registered in the filter configuration file 122, the information indicating the function name of the filter (the value of the name attribute of the Filter element) is acquired, and the acquired information and the file name of the program for performing the filtering function are registered in the selected list.

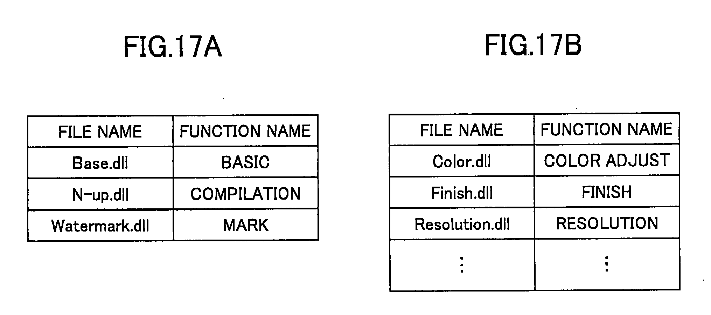

FIG. 17A shows an example of the selected list. In the selected list of FIG. 17A, the file name and function name of each of the filter registered in the filter configuration file 122 are listed. The example of FIG. 17A represents the case in which the contents of the filter configuration file 122 are as shown in FIG. 10.

FIG. 17B shows an example of the non-select list in which the file name and function name of each of the filters which are not registered in the filter configuration file 122 but stored in the filter storage unit 140 are listed. The contents of these lists are emptied before the processing of FIG. 16A is started.

Referring back to FIG. 16A, when the registration of the information indicating all the filters stored in the filter configuration file 122 into the selected list is completed, the result of the determination in step S42 is negative. The control progresses to step S45. In step S45, the CPU 101 checks the filters currently stored in the filter storage unit 140 (or a predetermined filter storage location).

It is preferred that the location of the filter storage unit is detectable by making reference to the setting of the OS. However, if the location is not detectable in such a manner, it is necessary to use another method to enable both the UI control unit 123 and the UI control unit 110 to detect the location.

After the step S45 is performed, the control progresses to steps S46 to S49. In steps S46 to S49, the information indicating the file name and function name of each of the filters which are not registered in the filter configuration file 122 is registered into the non-select list as shown in FIG. 17B.

After the step S49 is performed for all the filters stored in the filter storage unit 140, the result of the determination in the step S46 is negative, and the control progresses to step S50 shown in FIG. 16B.

In step S50, a filter configuration setting screen is displayed on the display according to the contents of the selected list and the non-select list.

Next, in step S51, a user's operation for requesting a change of the filter configuration in this filter configuration setting screen is received, and the contents of the selected list and the non-select list are updated according to the contents of the received operation.

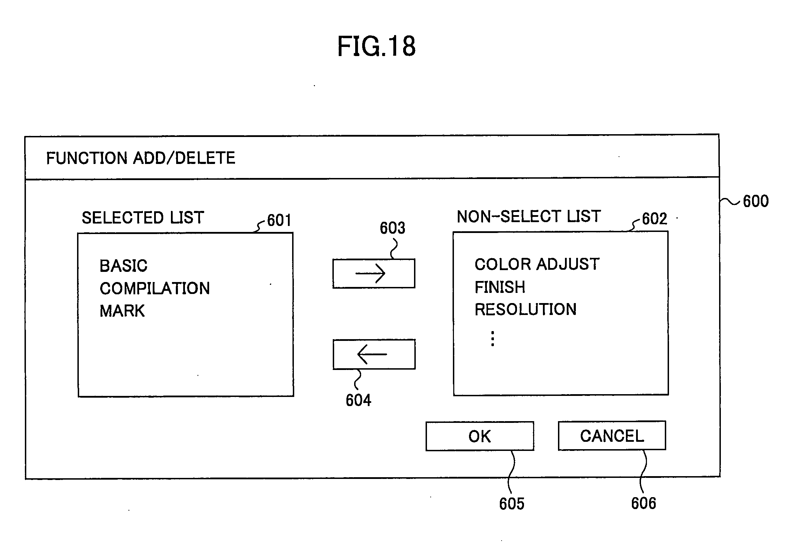

FIG. 18 shows an example of the filter configuration setting screen.

As shown in FIG. 18, the filter configuration setting screen 600 which is displayed by processing of step S50 in FIG. 16B includes a selected filter display portion 601, a non-selected filter display portion 602, a delete button 603, an add button 604, an OK button 605, and a cancel button 606.

In the selected filter display portion 601, a list of the filters selected for registration into the filter configuration file 122 is displayed. The initial value of each filter is the same as the function name of each filter registered in the selected list generated by the processing of FIG. 16A and FIG. 16B.

In the non-selected filter display portion 602, a list of the filters which is not selected for registration into the filter configuration file 122 is displayed. The initial value of each filter is the same as the function name of each filter registered into the non-select list generated by the processing of FIG. 16A and FIG. 16B.

When a filter (function) in the selected filter display portion 601 is selected and the delete button 603 is depressed, the filter can be moved to the non-selected filter display portion 602.

On the contrary, when a filter (function) in the non-selected filter display portion 606 is selected and the add button 604 is depressed, the filter can be moved to the selected filter display portion 601.

When these operations are performed, the display indications of the display portions 601 and 602 are updated, and the contents of the selected list and the non-select list are also updated. Therefore, addition/deletion of a filter to be registered in the filter configuration file 122 (i.e., addition/deletion of a function used when performing a printing job) can be requested by these operations.

The OK button 605 is a button for receiving a request for reflecting the filter configuration set up in the filter configuration setting screen 600 into the filter configuration file 122. The cancel button 606 is a button for receiving a request for closing the filter configuration setting screen 600 without changing the filter configuration file 122 or after the filter configuration file is changed.

When one of these buttons is depressed, the processing of FIG. 16B is shifted from step S51 to step S52. And when changes are to be reflected in the filter configuration file (or when the OK button 605 was depressed), the control progresses to step S53. In step S53, the contents of the filter configuration file 122 are updated based on the contents of the selected list at that time, so that the filter pipeline manager 121 may use each filter registered into the selected list for performing the processing.

Next, in step S54, the filter configuration setting screen 600 is closed, and the processing of FIG. 11 is performed so that the GUI screen based on the contents of the filter configuration file 122 after updating is displayed on the display monitor. The processing of FIG. 16A and FIG. 16B is terminated.

On the other hand, when the cancel button 606 was depressed in the filter configuration setting screen 600 in step S52, the filter configuration setting screen 600 is closed in step S55, and the control is returned to the previously displayed print setting screen 500.

By the foregoing processing, the user can select arbitrarily a combination of filters which are used by the filter pipeline manager 121 for generating the print data, i.e., the function which can be used at the time of printing, from among the plurality of the filters (functions) which are prepared beforehand.

Even when the function to be used was added or deleted, the processing of FIG. 11 enables the GUI of a print setting screen which receives setting values of the setting items needed for the used function to be generated automatically, and the print setting can be performed using the generated GUI, which will not cause confusion at the time of setting.

Suppose that the filters "compilation" and "mark" are added to, for example, the initial state shown in FIG. 14, the print setting screen which was the contents shown in FIG. 15 in the initial state can be changed to the contents shown in FIG. 12 automatically after the addition.

Because the contents of the filter configuration file 122 and the function data of each filter can be acquired from an external device, the function of setting up the filter to be used and the function of automatic generation of GUI can be provided by the application 11.

Therefore, for the developer of the application 11, use of the data processing capabilities by the printer driver 12 arranged outside the application 11 and design of a GUI for using the capabilities can be carried out with high flexibility.

The advantageous feature is provided primarily because the function data 300 and the interface unit 202 which offers the function data 300 to the external device are arranged in each filter 141. The advantageous feature is provided secondarily because the UI control unit 110 is arranged to acquire appropriate function data 300 based on the contents of the filter configuration file 122, and generate the data of a GUI based on the contents of the acquired function data 300.

The present invention is not limited to the specifically disclosed embodiments, and variations and modifications may be made without departing from the scope of the present invention.

For example, in the embodiment of FIG. 4, only one printer driver 12 is arranged. Alternatively, two or more printer drivers 12 may be arranged in the terminal device 10. In such a case, the filters 141 stored in the filter storage unit 140 may be shared by the two or more printer drivers.

Namely, registering a filter in the filter storage unit 140 is possible regardless of whether the filter is to be used by a specific printer driver, and which filter is actually used for performing the processing may be specified by the contents of the filter configuration file 122. And even if the same filter is registered in two or more filter configuration files 122, no problem arises.

If the filter configuration file 122 is stored in a specific folder, even if it is a case where there are two or more printer drivers 12, the application searches the folder and refers to the contents of the filter configuration file 122. Thus, it is possible for the application to detect what kind of processing is performed by a printer driver and whether the printer driver is registered in the terminal device 10.

Depending on the design of the filter pipeline manager 121 or the UI control unit 123, it is not necessary to prepare these components for every printer driver. In some cases, two or more filter configuration files 122 are prepared and the filter configuration file to be used may be selected from among these files 122. It is also possible to have one filter pipeline manager or one UI control unit operated as a different printer driver in accordance with this selection.

In the foregoing embodiments, the filter configuration information and the values of the name attributes of the elements contained in the filter function data are used as shown in FIG. 12, FIG. 15, and FIG. 18.

Alternatively, the name attributes may be indicated by symbolic values, and the data which indicate the relationship between the values of the name attributes and the caption may be prepared separately. In such a case, it is possible to use an arbitrary character string as the caption. In this case, the user may change the caption easily.

In the foregoing embodiments, the function data contained in each filter are dealt with as data of the Print Capabilities form, and the filter configuration file 122 is dealt with as data of the form specified by Microsoft Windows Vista ®.

If the data of the above form are used, the information processing device of the invention may be easily constituted using the function provided by the known OS. However, even if another data format is used, it is possible to perform an equivalent function.

The functions and setting options contained in each printer and each printer driver are not limited to those of the foregoing embodiments.

In the above embodiments, the example in which the filter and the printer driver 12 are stored in the terminal device 10 has been explained. However, the location where the filter is stored is not limited to the above embodiments.

As long as it is a location which can be accessed by the filter pipeline manager 121 and the UI control unit 123 or 110, the filter may be stored in a location or device even if it is different from the printer driver 12 or the application 11.

Moreover, the present invention is applicable to an information processing device having a device driver configured to control a device other than a printer.

## Claims

1. An information processing device including a plurality of modules, each of the plurality of modules comprising:
a processing unit configured to receive input data and setting options from an external device, perform a processing of the input data in accordance with the setting options, and return a processing result to the external device;
a storing unit configured to store information indicating setting items which are selectable as the setting options and setting values which are selectable for each setting item; and
an information providing unit configured to transmit, in response to a command, the information indicating the selectable setting items and the selectable setting values stored in the storing unit, to a source unit of transmitting the command.

2. The information processing device according to claim 1, further comprising:
a use module information storing unit configured to store use module information indicating a set of modules among the plurality of modules to be used to perform a series of processing;
an acquiring unit configured to transmit a command corresponding to each of the set of modules, to each of the set of modules in accordance with the use module information, and acquire from each of the set of modules the information indicating the selectable setting items and the selectable setting values stored in the storing unit of each module; and
a GUI preparing unit configured to generate data of a GUI for receiving a designated one of the selectable setting values for each of the selectable setting items, based on the information acquired by the acquiring unit.

3. The information processing device according to claim 2, further comprising:
a receiving unit configured to receive a set of modules from an external device; and
a use module information storage control unit configured to store information indicating the set of modules received by the receiving unit, into the use module information storing unit as the use module information.

4. The information processing device according to claim 2, further comprising:
a processing control unit configured to input, when a command for requesting execution of the series of processing and data to be processed in accordance with the use module information are received, the data to be processed and a setting value included in the received command to an appropriate one of the set of modules sequentially, in accordance with the use module information;
a designation receiving unit configured to control the GUI based on the data of the GUI generated by the GUI preparing unit, and receive a designated one of the setting values from a user through the GUI; and
a processing instruction unit configured to generate a command which requests execution of the series of processing in accordance with the designated one of the setting values received by the designation receiving unit, and output the command and data to be processed to the processing control unit.

5. The information processing device according to claim 4, further comprising
a data output unit configured to output a final processing result containing the processed data, which is obtained from the set of modules according to the use module information by the processing control unit, to the external device.

6. An information processing device controlling method which controls an information processing device including a plurality of modules, each of the plurality of modules including: a processing unit configured to receive input data and setting options from an external device, perform a processing of the input data in accordance with the setting options, and return a processing result to the external device; a storing unit configured to store information indicating setting items which are selectable as the setting options and setting values which are selectable for each setting item; and an information providing unit configured to transmit, in response to a command, the information indicating the selectable setting items and the selectable setting values stored in the storing unit, to a source unit of transmitting the command, the information processing device further including a use module information storing unit configured to store use module information indicating a set of modules among the plurality of modules to be used to perform a series of processing, the information processing device controlling method comprising:
transmitting a command corresponding to each of the set of modules, to each of the set of modules in accordance with the use module information;
acquiring from each of the set of modules the information indicating the selectable setting items and the selectable setting values stored in the storing unit of each module; and
generating data of a GUI for receiving a designated one of the selectable setting values for each of the selectable setting items, based on the acquired information.

7. The information processing device controlling method according to claim 6, further comprising:
receiving a set of modules from an external device; and
storing information indicating the set of modules received from the external device, into the use module information storing unit as the use module information.

8. The information processing device controlling method according to claim 6, further comprising:
inputting, when a command for requesting execution of the series of processing and data to be processed in accordance with the use module information are received, the data to be processed and a setting value included in the received command to an appropriate one of the set of modules sequentially, in accordance with the use module information;
controlling the GUI based on the generated data of the GUI to receive a designated one of the setting values from a user through the GUI;
generating a command which requests execution of the series of processing in accordance with the designated one of the setting values received; and
outputting the command and the data to be processed.

9. The information processing device controlling method according to claim 8, further comprising outputting a final processing result containing the processed data, which is obtained from the set of modules according to the use module information, to the external device.

10. A computer-readable recording medium storing a controlling program which, when executed by a computer of an information processing device including a plurality of modules, causes the computer to perform an information processing device controlling method which controls the information processing device, the information processing device controlling method comprising:
receiving input data and setting options from an external device;
performing a processing of the input data in accordance with the setting options;
returning a processing result to the external device;
storing information indicating setting items which are selectable as the setting options and setting values which are selectable for each setting item; and
transmitting, in response to a command, the stored information indicating the selectable setting items and the selectable setting values, to a source unit of transmitting the command.

11. The computer-readable recording medium according to claim 10, wherein the information processing device controlling method further comprises:
storing use module information indicating a set of modules among the plurality of modules to be used to perform a series of processing;
transmitting a command corresponding to each of the set of modules, to each of the set of modules in accordance with the use module information;
acquiring from each of the set of modules the stored information indicating the selectable setting items and the selectable setting values; and
generating data of a GUI for receiving a designated one of the selectable setting values for each of the selectable setting items, based on the acquired information.

12. The computer-readable recording medium according to claim 11, wherein the information processing device controlling method further comprises:
receiving a set of modules from an external device; and
storing information indicating the set of modules received from the external device, into a use module information storing unit of the information processing device as the use module information.

13. The computer-readable recording medium according to claim 11, wherein the information processing device controlling method further comprises:
inputting, when a command for requesting execution of the series of processing and data to be processed in accordance with the use module information are received, the data to be processed and a setting value included in the received command to an appropriate one of the set of modules sequentially, in accordance with the use module information;
controlling the GUI based on the generated data of the GUI to receive a designated one of the setting values from a user through the GUI;
generating a command which requests execution of the series of processing in accordance with the designated one of the setting values received; and
outputting the command and the data to be processed.

14. The computer-readable recording medium according to claim 13, wherein the information processing device controlling method further comprises outputting a final processing result containing the processed data, which is obtained from the set of modules according to the use module information, to the external device.
